# EUROPÄISCHE PATENTSCHRIFT

(11) **EP 1 703 609 B1**
(45) Veröffentlichungstag und Bekanntmachung des Hinweises auf die Patenterteilung: **14.10.2009**
(21) Anmeldenummer: 06005146.3
(22) Anmeldetag: 14.03.2006
(51) Int. Cl.: H02G 3/30

(54) **Verfahren und Vorrichtung zum Herstellen einer Elektroinstallation in Trockenbauwänden**
Method and device for manufacturing an electrical installation in dry walls
Méthode et dispositif de fabrication d'une installation électrique dans des cloisons sèches.

(30) Priorität: 18.03.2005 DE 102005012462
(43) Veröffentlichungstag der Anmeldung: 20.09.2006
(73) Patentinhaber: Tehalit GmbH, 67716 Heltersberg (DE)
(72) Erfinder: Klöckner, Oliver, 66976 Rodalben (DE)
(74) Vertreter: Patentanwälte Möll, Bitterich & Dr. Keller

(56) Entgegenhaltungen:
- EP-A- 0 434 167
- EP-A- 0 596 674
- US-A- 5 381 994

## Beschreibung

Die Erfindung betrifft Verfahren zum Herstellen von Elektroinstallationen in Trockenbauwänden gemäß dem Oberbegriff des Anspruchs 1. Sie betrifft ferner Vorrichtungen zum Herstellen derartiger Elektroinstallationen gemäß dem Oberbegriff des Anspruchs 3.

Aus der EP 1 207 606 A ist ein Verfahren zum Herstellen einer Elektroinstallation in Trockenbauwänden und ein passendes Geräteset bekannt. Das Geräteset besteht aus allseitig geschlossenen Kanalelementen und speziellen Kupplungselementen. Zur Montage des Kanalsystems müssen jedoch die senkrechten C-Schienen der Trockenbauwand durchbohrt werden. Das Durchbohren kostet Zeit und schwächt die Konstruktion. Insgesamt ist dieses bekannte Trockenbaukanalsystem aufwändig und wenig flexibel.

Weitere Trockenbaukanalsysteme sind bekannt aus der EP 1 207 605 A und der EP 1 207 607 A. Auch hier werden Spezialelemente benötigt. Zum einen müssen die C-Schienen an den Stellen, an denen die Kanäle montiert werden sollen, eine Verjüngung erhalten. Eine korrespondierende Verjüngung benötigen auch die Kanalelemente selbst. Dadurch soll sichergestellt werden, dass die Kabelkanäle nicht zu stark auftragen. Allerdings wird durch diese Verjüngung der zum Verlegen von Kabeln bestehende Querschnitt deutlich reduziert. Insgesamt sind auch diese Trockenbaukanalsysteme aufwändig und wenig flexibel.

Ein weiteres Trockenbaukanalsystem ist in der EP 0 434 167 A beschrieben. Allerdings erfolgt hierbei das Anbringen der Kanalprofile nicht an senkrechten C-Schienen, sondern an einem Träger, bei dem die Kanalelemente links- und rechtsseitig angebracht werden. Das Einbringen von Elektroinstallationsgeräten ist nicht vorgesehen. Des weiteren werden geschlossene Kabelkanalelemente verwendet, die einstückig ausgebildet sind.

Der vorliegenden Erfindung liegt die Aufgabe zugrunde, ein Verfahren der eingangs genannten Art anzugeben, das äußerst preiswert ist und eine hohe Flexibilität ermöglicht.

Diese Aufgabe wird gelöst durch ein Verfahren mit den Merkmalen des Anspruchs 1.

Die bei der vorliegenden Erfindung verwendeten U-förmigen Profilhalter lassen sich in jeder beliebigen Höhe an den C-Schienen befestigen. Des weiteren werden erfindungsgemäß keine geschlossenen Kabelkanalelemente verwendet, sondern parallele Seitenprofilleisten, die Deckelhalteprofile besitzen, auf die entsprechende Kanaldeckel, aber auch Geräteeinbaudosen oder Elektroinstallationsgeräte aufgerastet werden können. Die so gebildeten Kabelführungselemente besitzen also keine Rückwand im eigentlichen Sinn; zur Verlegung der Kabel und zur Montage der Geräte steht somit die gesamte Trockenbauwand zur Verfügung.

Wie schon erwähnt, werden die Seitenprofilleisten auf die Profilhalter aufgerastet. Einen verbesserten Halt erhält man, wenn die Seitenprofilleisten mit den C-Schienen verclincht werden. Diese Befestigungstechnik ist im Trockenwandbau eingeführt und benötigt keine zusätzlichen Haltelemente wie Nieten oder Schrauben.

Gegenstand der Erfindung ist auch ein flexibles Elektroinstallationssystem, welches mit geringem Aufwand in Trockenbauwände integriert werden kann.

Diese Aufgabe wird gelöst durch ein Elektroinstallationssystem mit den Merkmalen des Anspruchs 3.

Von besonderem Vorteil ist der geringe Aufwand, da lediglich eine Art von U-förmigem Profilhalter und eine Art von Seitenprofilleisten, die mit Deckelhalteprofilen versehen sind, benötigt werden. Die Profilhalter lassen sich an den senkrechten C-Schienen in jeder beliebigen Höhe einrasten oder auch festschrauben, beispielsweise mit selbstschneidenden Schrauben. Die Seitenprofilleisten werden dann in einfachster Weise auf die U-Schenkel der Profilhalter aufgerastet. Zusätzlich oder auch alternativ können sie wie schon erwähnt mit den C-Schienen verclincht werden.

Falls eine zusätzliche Befestigung der Seitenprofilschienen an den Profilhaltern gewünscht wird oder falls die Seitenprofilschienen nicht mit den C-Schienen verbunden werden sollen, können an den Profilhaltern zusätzliche Befestigungselemente vorgesehen werden.

Gemäß einer ersten Ausführungsform ist der Profilhalter mit Gleitschuhen ausgerüstet, die eine Nase besitzt. Diese Nase ist außen an das Deckelhalteprofil der Seitenprofilleiste anschiebbar. Auf diese Weise entsteht eine lösbare Verbindung, die auch dann noch hergestellt oder gelöst werden kann, wenn die Trockenbauwand bereits mit Gipskartonplatten usw. beplankt ist.

Vorteilhafterweise ist der Profilhalter mit Gleitschrägen ausgerüstet, die den Gleitschuh beim Anziehen ihrer Befestigungsschraube gegen die Seitenprofilleiste pressen.

Gemäß einer alternativen Ausführungsform ist der Profilhalter mit Drehknebeln ausgerüstet, die ihrerseits wieder eine Nase besitzen, die außen an das Deckelhalteprofil der Seitenprofilleiste andrehbar ist.

Zur Lagerung der Drehknebel ist der Profilhalter mit geeigneten Aufnahmen ausgerüstet.

Gemäß einer vorteilhaften Ausgestaltung der Erfindung sind an den Profilhaltern Kabelhaltekämme angeformt. Dies ermöglicht eine geordnete Verlegung der elektrischen Kabel und Leitungen, von Leerrohren und dergleichen.

Gemäß einer bevorzugten Ausgestaltung der Erfindung entspricht die Höhe der Seitenprofilleisten der Stärke der Beplankung. Dadurch ist sichergestellt, dass die Kanalfront mit der Beplankung flächengleich ist. So erhält man eine optimale Optik, ohne wie beim Stand der Technik die Trockenbaukonstruktion schwächen oder auch nur verändern zu müssen.

Um die Schnittkanten der Beplankung kaschieren zu können, können entweder an den Seitenprofilleisten oder an den Kanaldeckeln Kaschierleisten angeformt sein.

Anhand der Zeichnung soll die Erfindung in Form von Ausführungsbeispielen näher erläutert werden. Es zeigen jeweils rein schematisch
- Fig. 1: in isometrischer Darstellung eine teilweise beplankte Trockenbauwand mit vorbereitetem Elektroinstallationssystem,
- Fig. 2: einen Abschnitt des Elektroinstallationssystems der Fig. 1 als erste Ausführungsform in vergrößerter Darstellung,
- Fig. 3: in nochmals vergrößerter Darstellung die wesentlichen Elemente des Elektroinstallationssystems der Fig. 2,
- Fig. 4: eine alternative Ausführungsform des Elektroinstallationssystems,
- Fig. 5: einen Teilquerschnitt durch eine Trockenbauwand mit fertig montiertem Elektroinstallationssystem gemäß Fig. 4,
- Fig. 6: eine isometrische Darstellung einer dritten Ausführungsform eines Elektroinstallationssystems,
- Fig. 7: eine Seitenansicht des Elektroinstallationssystems der Fig. 6,
- Fig. 8: einen Querschnitt durch das Elektroinstallationssystems der Fig. 6 und 7,
- Fig. 9: eine isometrische Darstellung einer vierten Ausführungsform eines Elektroinstallationssystems,
- Fig. 10: eine Seitenansicht des Elektroinstallationssystems der Fig. 9 und
- Fig. 11: einen Querschnitt durch das Elektroinstallationssystem der Fig. 9 und 10.

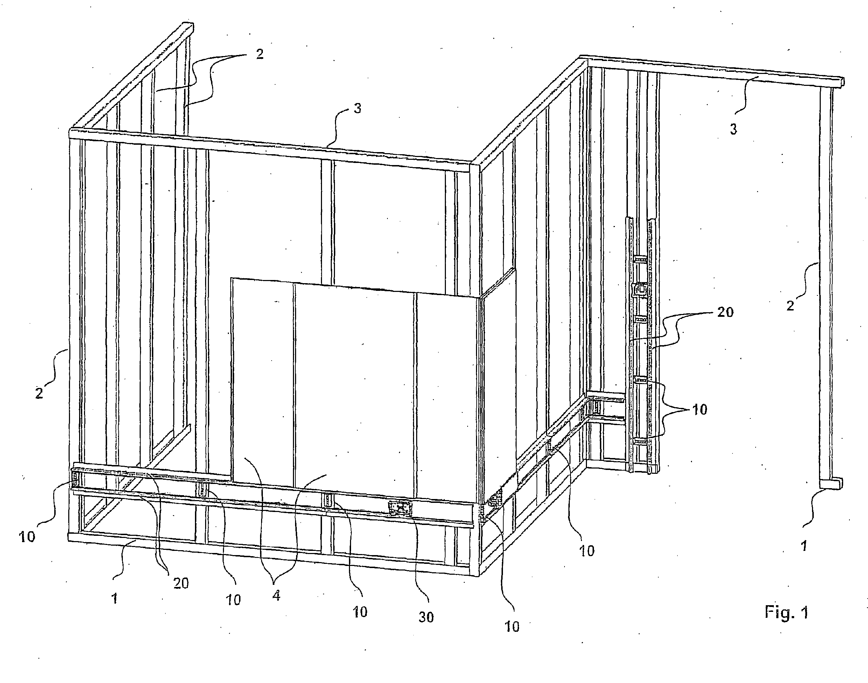

Fig. 1 zeigt in isometrischer Darstellung eine teilweise mit Gipskartonplatten 4 beplankte Trockenbauwand. Diese besteht aus Bodenschienen 1, Deckenschienen 3 und senkrechten C-Schienen 2. An den C-Schienen 2 sind in beliebiger Höhe U-förmige Profilhalter 10 montiert. Auf diese sind paarweise Seitenprofilleisten 20 aufgerastet. Dadurch entsteht ein Kanalsystem ohne Rückwand.

Wie Fig. 1 zeigt, können die Profilhalter 10 und die Seitenprofilleisten 20 sowohl waagerecht als auch senkrecht fluchtend verlegt werden.

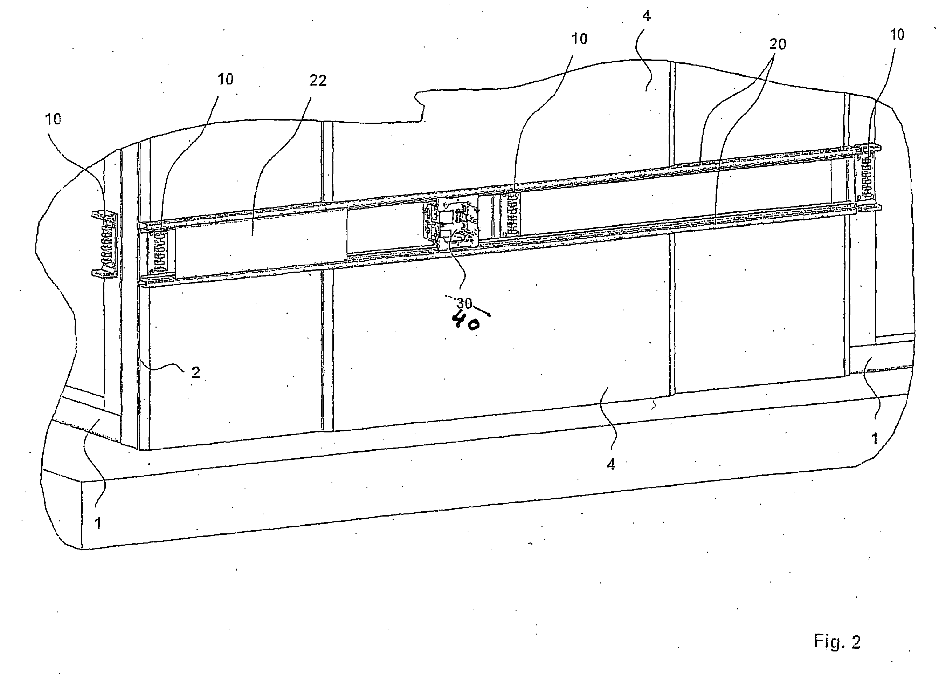

Fig. 2 zeigt als erste Ausführungsform in vergrößertem Maßstab einen Ausschnitt aus dem Elektroinstallationssystem. Man erkennt die U-förmigen Profilhalter 10 mit den aufgerasteten Seitenprofilleisten 20. Auf Deckelhalteprofile der Seitenprofilleisten 20 ist ein Kanaldeckel 22 aufgerastet. Des weiteren erkennt man eine Geräteeinbaudose 40, ebenfalls auf die Deckelhalteprofile 21 der Seitenprofilleisten 20 aufgerastet.

Schließlich erkennt man im mittleren Bereich eine Beplankung 4 auf der Tragkonstruktion der Trockenbauwand.

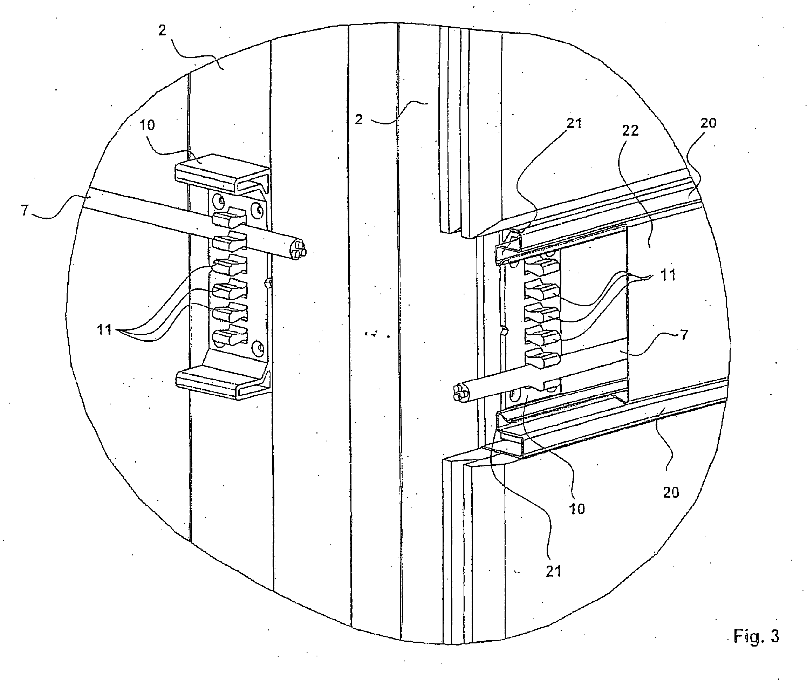

Fig. 3 zeigt in weiter vergrößertem Maßstab einen Ausschnitt aus dem Elektroinstallationssystem der Fig. 2.

Besonders gut erkennbar sind die U-förmigen Profilhalter 10. Diese sind mit einem Kabelhaltekamm 11 ausgerüstet, der eine geordnete Verlegung von elektrischen Leitungen 7, Leerrohren und dergleichen ermöglicht.

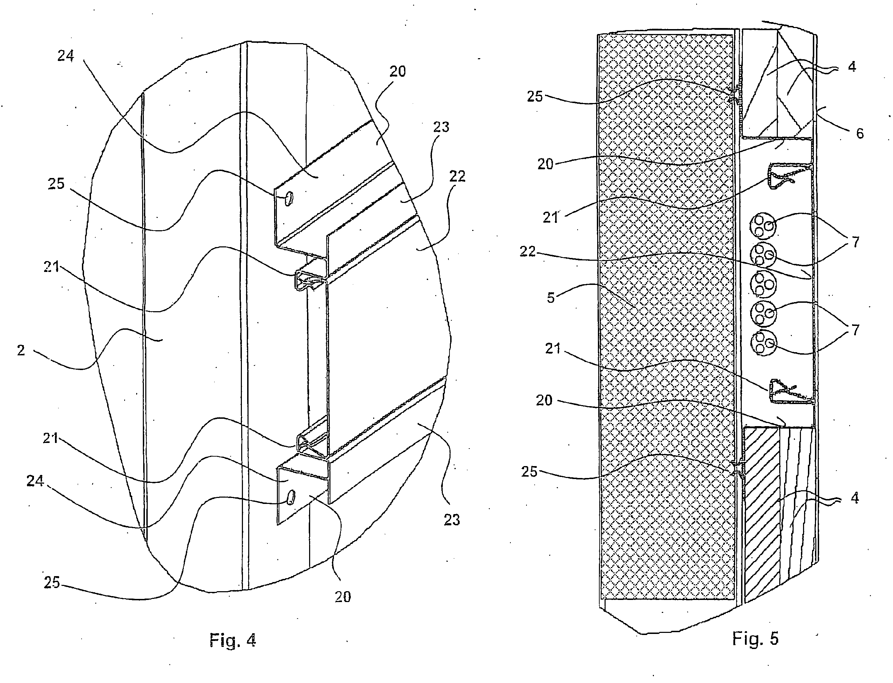

Fig. 4 zeigt eine alternative Ausführungsform der Seitenprofile 20. Diese besitzen zunächst einen Fuß 24, der mit Hilfe einer Clinchverbindung 25 an der C-Schiene 2 befestigt ist. Des weiteren besitzen die Seitenprofile 20 Kaschierleisten 23, die die Schnittkante der an die Seitenprofile 20 anstoßenden Beplankung (nicht dargestellt) kaschieren.

Fig. 5 zeigt einen Teilquerschnitt durch eine fertiggestellte Trockenbauwand. Man erkennt die Seitenprofile 20, auf deren Deckelhalteprofile 21 ein Kanaldeckel 22 aufgerastet ist. Man erkennt des weiteren die Clinchverbindungen 25. Angedeutet ist eine Isolierung 5 in der Trockenbauwand.

Des weiteren erkennt man die Beplankung 4, beispielsweise aus zwei Gipskartonplatten bestehend, die direkt an die Seitenprofile 20 anstößt. Die Frontfläche der Beplankungen 4, die Frontflächen der Seitenprofile 20 und die Frontfläche des Kanaldeckels 22 fluchten und sind beispielsweise mit einer Tapete 6 tapeziert.

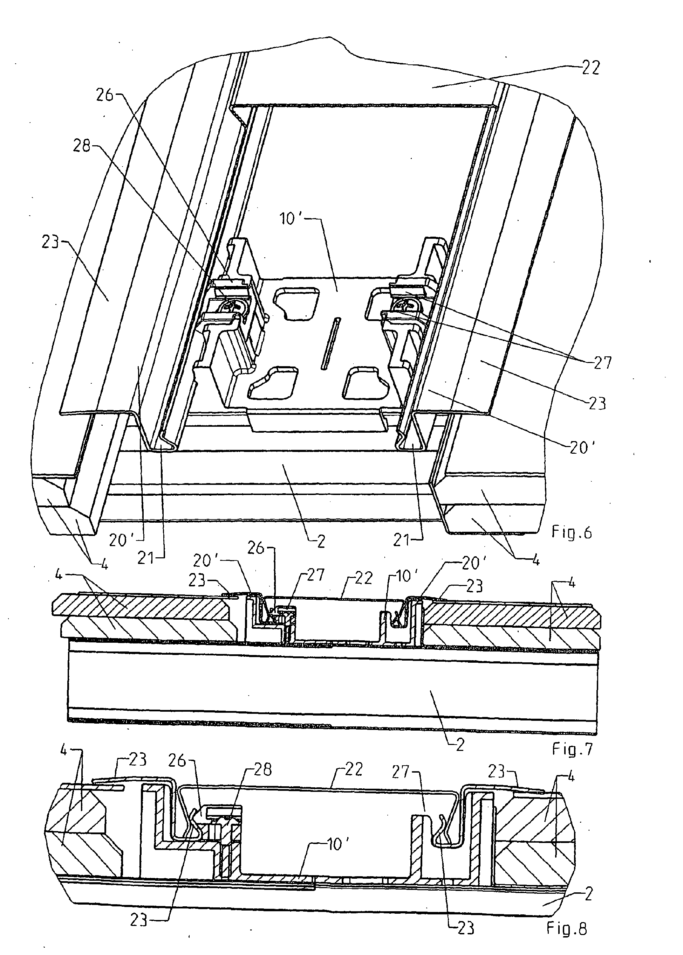

Fig. 6 zeigt eine isometrische Darstellung einer dritten Ausführungsform des erfindungsgemäßen Elektroinstallationssystems für Trockenbauwände. Man erkennt eine C-Schiene 2, auf der ein Profilhalter 10' befestigt ist. Des weiteren erkennt man die Beplankung 4.

Auf den Profilhalter 10' aufgerastet erkennt man zwei Seitenprofilschienen 20' mit angeformten Kaschierleisten 23, die die Beplankung 4 übergreifen.

Zur Herstellung einer lösbaren Verbindung zwischen den Profilhalter 10' und den Seitenprofilschienen 20' sind mittels Gewindeschrauben 28 am Profilhalter 10' Gleitschuhe 26 angebracht, deren Nasen sich außen gegen die Deckelhalteprofile 21 der Seitenprofilschienen 20' anlegen. Dies wird erreicht mit Hilfe von Gleitschrägen 27, die am Deckelhalteprofil 10' angeformt sind.

Fig. 7 als Seitenansicht und Fig. 8 als Querschnitt lassen die Einzelheiten der in Fig. 6 gezeigten Konstruktion im Bereich des Profilhalters 10' und der Seitenprofilschienen 20' ebenfalls erkennen.

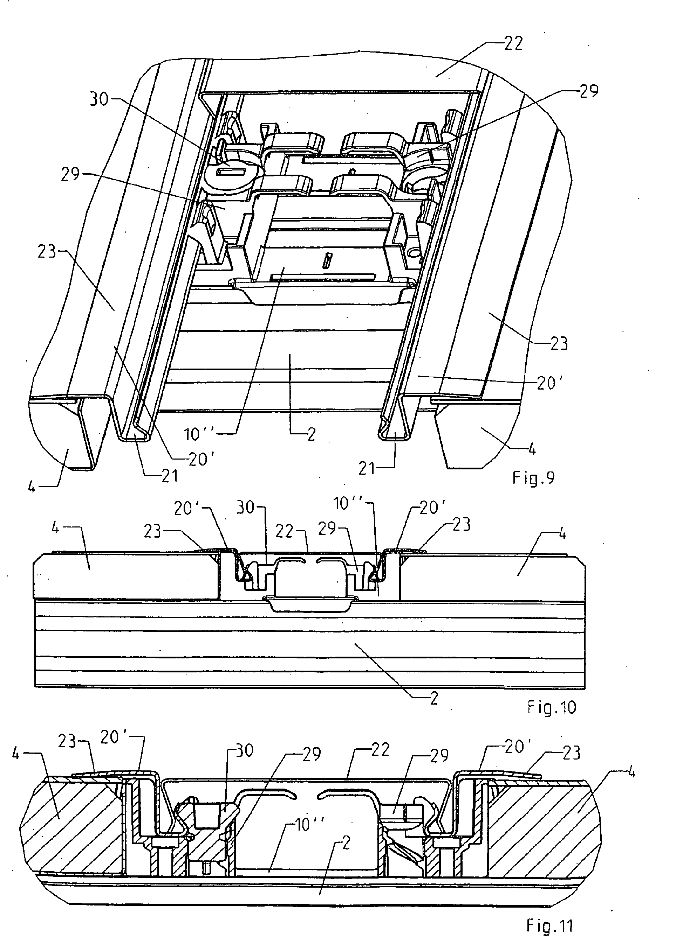

Fig. 9 zeigt eine isometrische Darstellung einer vierten Ausführungsform des erfindungsgemäßen Elektroinstallationssystems für Trockenbauwände. Der hier abgebildete Profilhalter 10" besitzt Aufnahmen 29 für je einen Drehknebel 30. Dieser Drehknebel 30 besitzt wieder eine Nase, die sich außen an das Deckelhalteprofil 23 der Seitenprofilleisten 20' anlegt und so eine lösbare Verbindung zwischen Profilhalter 10" und Seitenprofilschiene 20' bildet.

Fig. 10 als Seitenansicht und Fig. 11 als Querschnitt lassen die Einzelheiten der in Fig. 9 dargestellten Ausführungsform erkennen.

Dank der lösbaren Verbindung zwischen den Profilhaltern 10', 10" und den Seitenprofilschienen 20' besteht die Möglichkeit, die Seitenprofilschienen 20' erst dann anzubringen, wenn die Beplankung 4 einschließlich der Oberflächengestaltung, beispielsweise durch Tapezieren, fertig stellt ist. Auf diese Weise ergibt sich stets ein sauberer Kantenabschluss.

## Patentansprüche

1. Verfahren zum Herstellen einer Elektroinstallation in Trockenbauwänden, welche aus Bodenschienen (1), senkrechten C-Schienen (2), Deckenschienen (3), Isoliermatten (5) und einer Beplankung (4) aufgebaut sind, unter Verwendung von vorgefertigten Bauelementen, **dadurch gekennzeichnet, dass** an den C-Schienen (2) zunächst U-förmige Profilhalter (10, 10', 10") befestigt werden, dass anschließend neben und/oder an diesen zwei parallele, voneinander getrennte Seitenprofilleisten (20, 20') mit Deckelhalteprofilen (21) befestigt werden, dass zumindest eine Geräteeinbaudose (40) auf die Deckelhalteprofile (21) der Seitenprofilleisten (20, 20') aufgesetzt wird und dass zur Fertigstellung der Installation ein Kanaldeckel (22) aufgerastet wird.

2. Verfahren nach Anspruch 1, **dadurch gekennzeichnet, dass** die Seitenprofilleisten (20) mit den C-Schienen (2) verclincht werden.

3. Elektroinstallationssystem für Trockenbauwände, welche aus Bodenschienen (1), senkrechten C-Schienen (2), Deckenschienen (3), Isoliermatten (5) und einer Beplankung (4) aufgebaut sind, umfassend Kabelkanalelemente (20, 20'), Kanaldeckel (22), Geräteeinbaudosen (40) und/oder Elektroinstallationsgeräte, **gekennzeichnet durch**
- U-förmige Profilhalter (10, 10', 10"), zu befestigen an den C-Schienen (2),
- und zwei parallele, voneinander getrennte Seitenprofilleisten (20, 20'),
- zu befestigen an den Profilhaltern (10, 10', 10"),
- und mit Deckelhalteprofilen (21) versehen,
- und zumindest eine Geräteeinbaudose (40), die auf die Deckelhalteprofile (21) der Seitenprofilleisten (20, 20') aufgesetzt wird.

4. Elektroinstallationssystem nach Anspruch 3, **dadurch gekennzeichnet, dass** die Seitenprofilleisten (20, 20') auf die Schenkel der Profilhalter (10, 10', 10") aufgerastet sind.

5. Elektroinstallationssystem nach Anspruch 3, **dadurch gekennzeichnet, dass** der Profilhalter (10') mit Gleitschuhen (26) mit Nase ausgerüstet ist und dass die Nase außen an das Deckelhalteprofil (23) der Seitenprofilleiste (20, 20') anschiebbar ist.

6. Elektroinstallationssystem nach Anspruch 5, **dadurch gekennzeichnet, dass** der Profilhalter (10') mit Gleitschrägen (27) ausgerüstet ist, die die Gleitschuhe (26) beim Anziehen ihrer Befestigungsschrauben (28) gegen die Seitenprofilleiste (20, 20') pressen.

7. Elektroinstallationssystem nach Anspruch 3, **dadurch gekennzeichnet, dass** der Profilhalter (10") mit Drehknebeln (30) mit Nase ausgerüstet ist und dass die Nase außen an das Deckelhalteprofil (23) der Seitenprofilleiste (20, 20') andrehbar ist.

8. Elektroinstallationssystem nach Anspruch 7, **dadurch gekennzeichnet, dass** der Profilhalter (10") mit Aufnahmen (29) für die Drehknebel (30) ausgerüstet ist.

9. Elektroinstallationssystem nach Anspruch 3, **dadurch gekennzeichnet, dass** an den Profilhaltern (10) Kabelhaltekämme (11) angeformt sind.

10. Elektroinstallationssystem nach einem der Ansprüche 3 bis 9, **dadurch gekennzeichnet, dass** die Höhe der Seitenprofile (20, 20') der Stärke der Beplankung entspricht.

11. Elektroinstallationssystem nach einem der Ansprüche 3 bis 10, **dadurch gekennzeichnet, dass** an den Seitenprofilleisten (20, 20') Kaschierleisten (23) angeformt sind.

12. Elektroinstallationssystem nach einem der Ansprüche 3 bis 11, **dadurch gekennzeichnet, dass** am Kanaldeckel (22) Kaschierleisten angeformt sind.

13. Elektroinstallationssystem nach einem der Ansprüche 3 bis 12, **dadurch gekennzeichnet, dass** die Geräteeinbaudosen (40) und/oder die Elektroinstallationsgeräte für den frontrastenden Einbau ausgebildet sind.

## Claims

1. Method for manufacturing an electrical installation in dry walls, which are composed of bottom rails (1), perpendicular C-rails (2), top rails (3), insulating mats (5) and planking (4), using prefabricated structural elements, **characterised in that** U-shaped profile holders (10, 10', 10") are firstly fastened to the C-rails (2), that two parallel side profile strips (20, 20'), which are separate from one another, with cover retaining profiles (21) are subsequently fastened near and/or to these, that at least one apparatus installation box (40) is positioned on the cover retaining profiles (21) of the side profile strips (20, 20'), and that a duct cover (22) is locked on in order to complete the installation.

2. Method according to Claim 1, **characterised in that** the side profile strips (20) are clinched to the C-rails (2).

3. Electrical installation system for dry walls, which are composed of bottom rails (1), perpendicular C-rails (2), top rails (3), insulating mats (5) and planking (4), comprising cable duct elements (20, 20'), a duct cover (22), apparatus installation boxes (40) and/or electrical installation apparatus, **characterised by**
- U-shaped profile holders (10, 10', 10"), to be fastened to the C-rails (2),
- and two parallel side profile strips (20, 20'), which are separate from one another,
- to be fastened to the profile holders (10, 10', 10"),
- and provided with cover retaining profiles (21),
- and at least one apparatus installation box (40), which is positioned on the cover retaining profiles (21) of the side profile strips (20, 20').

4. Electrical installation system according to Claim 3, **characterised in that** the side profile strips (20, 20') are locked onto the legs of the profile holders (10, 10', 10").

5. Electrical installation system according to Claim 3, **characterised in that** the profile holder (10') is equipped with slide blocks (26) with a lug, and that the lug can be pushed externally onto the cover retaining profile (23) of the side profile strip (20, 20').

6. Electrical installation system according to Claim 5, **characterised in that** the profile holder (10') is equipped with slide slopes (27) which press the slide blocks (26) against the side profile strip (20, 20') when their fastening screws (28) are tightened.

7. Electrical installation system according to Claim 3, **characterised in that** the profile holder (10") is equipped with rotary knobs (30) with a lug, and that the lug can be turned externally onto the cover retaining profile (23) of the side profile strip (20, 20').

8. Electrical installation system according to Claim 7, **characterised in that** the profile holder (10") is equipped with receptacles (29) for the rotary knobs (30).

9. Electrical installation system according to Claim 3, **characterised in that** cable retaining combs (11) are formed on the profile holders (10).

10. Electrical installation system according to any one of Claims 3 to 9, **characterised in that** the height of the side profiles (20, 20') corresponds to the thickness of the planking.

11. Electrical installation system according to any one of Claims 3 to 10, **characterised in that** covering strips (23) are formed on the side profile strips (20, 20').

12. Electrical installation system according to any one of Claims 3 to 11, **characterised in that** covering strips are formed on the duct cover (22).

13. Electrical installation system according to any one of Claims 3 to 12, **characterised in that** the apparatus installation boxes (40) and/or the electrical installation apparatus are formed for front-locking installation.

## Revendications

1. Procédé de fabrication d'une installation électrique dans des cloisons sèches, lesquelles sont constituées de rails de sol (1), de rails en C verticaux (2), de rails de plafond (3), de matelas isolants (5) et d'un bordage (4), en utilisant des éléments de construction préfabriqués, **caractérisé en ce que** des supports de profilés en forme de U (10, 10', 10") sont d'abord fixés sur les rails en C (2), qu'à côté et/ou sur ceux-ci sont ensuite fixées deux baguettes profilées latérales (20, 20') parallèles séparées l'une de l'autre avec des profilés de fixation de couvercle (21), qu'au moins une boîte d'encastrement ou prise pour appareil (40) est montée sur les profilés de fixation de couvercle (21) des baguettes profilées latérales (20, 20') et que, pour achever l'installation, un couvercle de conduit (22) est encliqueté.

2. Procédé selon la revendication 1, **caractérisé en ce que** les baguettes profilées latérales (20) sont serties avec les rails en C (2).

3. Système d'installation électrique pour cloisons sèches, lesquelles sont constituées de rails de sol (1), de rails en C verticaux (2), de rails de plafond (3), de matelas isolants (5) et d'un bordage (4), comprenant des éléments de conduit de câble (20, 20'), un couvercle de conduit (22), des boîtes d'encastrement ou prise pour appareil (40) et/ou des appareils d'installation électrique,
**caractérisé par**
- des supports de profilés en forme de U (10, 10', 10") destinés à être fixés sur les rails en C (2),
- deux baguettes profilées latérales (20, 20') parallèles séparées l'une de l'autre
- destinées à être fixés sur les supports de profilés (10, 10', 10"),
- et pourvues de profilés de fixation de couvercle (21),
- et au moins une boîte d'encastrement ou prise pour appareil (40) qui est montée sur les profilés de fixation de couvercle (21) des baguettes profilées latérales (20, 20').

4. Système d'installation électrique selon la revendication 3, **caractérisé en ce que** les baguettes profilées latérales (20, 20') sont encliquetées sur les branches des supports de profilé (10, 10', 10").

5. Système d'installation électrique selon la revendication 3, **caractérisé en ce que** le support de profilé (10') est équipé de patins (26) avec un ergot et que l'ergot peut être poussé extérieurement sur le profilé de fixation de couvercle (23) de la baguette profilée latérale (20, 20').

6. Système d'installation électrique selon la revendication 5, **caractérisé en ce que** le support de profilé (10') est équipé de chanfreins de glissement (27) qui pressent les patins (26) contre la baguette profilée latérale (20, 20') lors du serrage de leurs vis de fixation (28).

7. Système d'installation électrique selon la revendication 3, **caractérisé en ce que** le support de profilé (10") est équipé de manettes rotatives (30) avec un ergot et que l'ergot peut être tourné extérieurement sur le profilé de fixation de couvercle (23) de la baguette profilée latérale (20, 20').

8. Système d'installation électrique selon la revendication 7, **caractérisé en ce que** le support de profilé (10") est équipé de logements (29) pour les manettes rotatives (30).

9. Système d'installation électrique selon la revendication 3, **caractérisé en ce que** des peignes de fixation de câbles (11) sont formés sur les supports de profilé (10).

10. Système d'installation électrique selon l'une des revendications 3 à 9, **caractérisé en ce que** la hauteur des profilés latéraux (20, 20') correspond à l'épaisseur du bordage.

11. Système d'installation électrique selon l'une des revendications 3 à 10, **caractérisé en ce que** des baguettes de recouvrement (23) sont formées sur les baguettes profilées latérales (20, 20').

12. Système d'installation électrique selon l'une des revendications 3 à 11, **caractérisé en ce que** des baguettes de recouvrement sont formées sur le couvercle de conduit (22).

13. Système d'installation électrique selon l'une des revendications 3 à 12, **caractérisé en ce que** les boîtes d'encastrement ou prise pour appareil (40) et/ou les appareils d'installation électrique sont réalisés pour un montage par encliquetage frontal.
